# EUROPÄISCHE PATENTSCHRIFT

(11) **EP 3 184 236 B1**
(45) Veröffentlichungstag und Bekanntmachung des Hinweises auf die Patenterteilung: **20.02.2019**
(21) Anmeldenummer: 16200139.0
(22) Anmeldetag: 23.11.2016
(51) Int. Cl.: B23Q 11/08

(54) **LÄNGENVERÄNDERLICHE FALTENABDECKUNG**
EXTENDABLE COVERING
PANNEAU EXTENSIBLE

(30) Priorität: 21.12.2015 DE 102015122401
(43) Veröffentlichungstag der Anmeldung: 28.06.2017
(73) Patentinhaber: Möller Werke GmbH, 33649 Bielefeld (DE)
(72) Erfinder: CAKMAK, Buelent, 33649 Bielefeld (DE); REDEKER, Bernd, 33758 Schloß Holte-Stukenbrock (DE); DIETRICH, Stefan, 33154 Salzkotten (DE)
(74) Vertreter: Schober, Mirko

(56) Entgegenhaltungen:
- EP-A1- 2 803 477
- DE-A1- 3 343 471
- DE-U1-202015 001 696
- FR-A1- 2 559 228
- JP-A- 2008 012 639
- JP-A- 2014 030 886

## Beschreibung

Die Erfindung betrifft eine längenveränderliche Faltenabdeckung nach dem Oberbegriff von Patentanspruch 1.

Faltenabdeckungen dienen beispielsweise der aus optischen und/oder Sicherheitsgründen erforderlichen Abschirmung beweglicher Maschinenbauteile. Der Aufbau derartiger Abschirmungen sieht die Verwendung eines mehrfach gefalteten Deckenmaterials vor. Durch wechselseitiges Umlegen des Deckenmaterials entlang von Faltenkanten werden entsprechende Innen- und Außenfalten ausgebildet, welche eine quer zu diesen verlaufende Längenveränderung der so gebildeten Faltenabdeckung ermöglichen. Dabei werden die beiden Flanken jeder Falte um die sie miteinander verbindende Faltenkante herum gegeneinander verschwenkt, so dass der zwischen ihnen eingeschlossene Winkel prinzipiell von 0° bis 180° variieren kann. Bei einem Winkel von 0° liegen dann die jeweiligen Flanken entsprechend aufeinander (Faltenabdeckung ist vollständig zusammengeschoben), während sie bei einem Winkel von 180° eine gemeinsame ebene Fläche ausbilden (Faltenabdeckung ist vollständig auseinandergezogen bzw. überstreckt).

Das Deckenmaterial umfasst einen Zuschnitt aus einem geeigneten Bahnenmaterial, bei welchem es sich beispielsweise um ein beschichtetes Gewebe oder eine Kunststofffolie handeln kann. Je nach Anforderung an die Faltenabdeckung kann das Deckenmaterial dabei ein- oder mehrlagig ausgestaltet sein, wobei im letzteren Fall die einzelnen Schichten bevorzugt stoffschlüssig miteinander verbunden sind (beispielsweise miteinander verklebt). So können dem Deckenmaterial auch Schichten aus unterschiedlichen Materialien zugrunde liegen. Weitere Ausgestaltungen sehen die Ergänzung des Deckenmaterials um weitere Elemente vor, bei denen es sich beispielsweise um Führungsrahmen, Gleiter sowie Blechlamellen handeln kann.

Um die notwendige Grundform des jeweiligen Zuschnitts zu erhalten, wird dieser in der Regel zunächst mechanisch aus dem Bahnenmaterial herausgetrennt (z.B. mittels Schneidmesser). Anschließend erfolgt dann die Übertragung des erforderlichen Faltmusters, indem der Zuschnitt entweder direkt und/oder unter Einbringung von Materialschwächungen in das Deckenmaterial entlang der vorgesehenen Faltenkanten geknickt wird. Insbesondere bei der Verwendung eines mehrlagigen Deckenmaterials kann beispielsweise nur eine seiner Schichten eine geeignete Materialschwächung aufweisen, um die notwendige Flexibilität innerhalb der Faltenkante zu gewährleisten. Als mögliche Maßnahmen zur Einbringung einer gezielten Materialschwächung sind beispielsweise Fräsen, mechanisches Lochen oder Messerzuschnitt zu nennen.

Die Verarbeitung des Bahnen- bzw. Deckenmaterials einer Faltenabdeckung erfolgt üblicherweise mittels geeigneter (Messer-)Faltmaschinen, welche eine CNC-Ansteuerung (Computerized Numerical Control) beinhalten können. Trotz dieser überaus präzisen Bearbeitungsmöglichkeiten gestalten sich diese in der Praxis durchaus zeitaufwendig. Insbesondere der mechanische Kontakt zu den einzelnen Bearbeitungswerkzeugen verursacht mitunter hohe Verschiebekräfte, welche eine überaus sorgfältige Materialfixierung erfordern. Zudem muss beispielsweise das Einbringen erforderlicher Löcher, Schlitze oder Aussparungen in das Bahnen- bzw. Deckenmaterial in einem weiteren Arbeitsschritt erfolgen, da diese nicht zusammen mit der Herstellung der Falten eingebracht werden können. Auch geht die Verbindung des Deckenmaterials mit weiteren Elementen mit zusätzlichem Aufwand einher.

So ist aus der DE 20 2010 011 667 U1 bekannt, dass Faltenbälge mit Metalllamellen vor Beschädigungen geschützt werden. Die Lamellen müssen mit dem Faltenbalg mitbewegt werden und sind daher mit diesem verbunden. Hierzu sind in den Lamellen Öffnungen eingebracht, zwischen denen sich ein Steg bildet. Über diesen Steg werden Klammern aus Federstahl geklemmt, an deren freien Enden Widerhaken gebildet werden, mit denen die Lamelle jeweils an eine Falte des Faltenbalgs geklemmt wird.

Auch wenn die Klammern jeweils versetzt an den Lamellen angebracht sind, tragen sie auf und begrenzen somit das Zusammenschieben des Faltenbalgs mit den Lamellen. Dadurch muss die vom Faltenbalg überdeckte Öffnung erheblich größer sein, als die erforderliche Nutzöffnung, was das Maschinengestell eventuell instabiler macht. Aus der JP201430886 ist es bekannt, Befestigungselemente für die Verbindung der Lamellen mit dem Faltenbalg zu verwenden, womit das gleiche Problem auftritt.

Vor diesem Hintergrund liegt der vorliegenden Erfindung die Aufgabe zugrunde, eine Faltenabdeckung mit Metalllamellen sowie ein Verfahren zu dessen Herstellung dahingehend weiterzuentwickeln, dass sie beim Zusammenschieben einen möglichst kleinen Bereich der abzudeckenden Öffnung einnehmen.

Diese Aufgabe wird durch eine Faltenabdeckung mit den Merkmalen von Anspruch 1 gelöst. Vorteilhafte Ausführungsformen finden sich in den Unteransprüchen.

Die Erfindung ist auf eine verstärkte Faltenabdeckung gerichtet, welche entlang einer Verschieberichtung längenveränderlich ist. Hierzu umfasst die Faltenabdeckung ein Deckenmaterial, welches einen Zuschnitt mit einer Mehrzahl an entlang von Faltenkanten geknickter bzw. gefalteter Falten aufweist. Dabei ist die Faltenabdeckung auf mindestens einer ihrer Außenflächen mit wenigstens einer Metalllamelle abgedeckt. Die wenigstens eine Metalllamelle ist in geeigneter Weise an der zugehörigen Falte befestigt.

Der sich aus der Anordnung der zusätzlichen Metalllamelle ergebende Vorteil ist in der Verstärkung der wenigstens einen so ausgestatteten Falte zu sehen. Neben einer erhöhten Festigkeit und entsprechend verbesserten Formbeständigkeit kann hierdurch auch deren Haltbarkeit und/oder Durchschlagfestigkeit, insbesondere bei Beaufschlagung mit Metallspänen, in vorteilhafter Weise erhöht sein.

Dabei weist die Metalllamelle (im weiteren Verlauf als "Lamelle" bezeichnet) eine das Deckenmaterial bzw. wenigstens die zugehörige Falte zumindest bereichsweise abdeckende Lamellenoberfläche auf.

Erfindungsgemäß weist nun die wenigstens eine Lamelle zumindest einen ebenfalls etwa senkrecht auf der Lamellenoberfläche stehenden Befestigungsfortsatz auf. Dabei kann das Deckenmaterial in besonders bevorzugter Weise entsprechend der Anzahl der Befestigungsfortsätze in dieses eingebrachte Befestigungsöffnung/en umfassen. Zur Verbindung der mindestens einen Lamelle mit dem Deckenmaterial kann der wenigstens eine Befestigungsfortsatz durch die zugehörige Befestigungsöffnung innerhalb des Deckenmaterials hindurchgeführt werden. Je nach Ausgestaltung ermöglich diese Variante einen Verzicht auf zusätzliche Befestigungsmittel, da hierbei der Befestigungsfortsatz selbst als ein Befestigungsmittel anzusehen ist.

In diesem Zusammenhang kann die Befestigungsöffnung bevorzugt in Form eines Schlitzes ausgebildet sein. Dabei kann der Schlitz einen geradlinigen oder aber einen davon abweichenden Verlauf aufweisen. So kann dieser beispielsweise wenigstens einen Sprung in seinem Verlauf besitzen, wie beispielsweise bei einer L- oder U-förmigen Ausgestaltung. In Ergänzung zu einer U-förmigen Ausgestaltung kann die Befestigungsöffnung auch endseitig der U-Schenkel voneinander weg weisende Schlitze in Form von Stegen umfassen. Hierdurch wird das Deckenmaterial im Bereich der Befestigungsöffnung zumindest teilweise klappbar, so dass der Befestigungsfortsatz einfach durch diese hindurchgeführt werden kann. Zusätzlich erhöht die Klappbarkeit eine begrenzte Ver-schwenkbarkeit von Deckenmaterial und Befestigungsfortsatz zueinander, wodurch die Längenveränderbarkeit der Faltenabdeckung erleichtert wird.

In einer Weiterentwicklung der oben genannten Variante kann das Deckenmaterial wenigstens jeweils eine erste und zweite Befestigungsöffnung aufweisen, von denen die erste Befestigungsöffnung in einer ersten der Flanken einer Falte gelegen ist, während die zweite Befestigungsöffnung im Wesentlichen auf jener der mindestens einen Lamelle zugewandten und an die erste Flanke angrenzende Faltenkante der Falte angeordnet ist. Mit anderen Worten liegt dabei die erste Befestigungsöffnung innerhalb der ersten Flanke einer Falte, wobei die zweite Befestigungsöffnung im Bereich der Faltenkante angeordnet ist. Hierdurch stehen in vorteilhafter Weise zwei sich aus der ersten und zweiten Befestigungsöffnung zusammensetzende Befestigungsöffnungen pro Befestigungsfortsatz zur Verfügung, durch welche hindurch dieser anzuordnen ist.

Es werden so genügend Andruckkräfte über diese Form einer Steckverbindung auf die Lamelle/n erzeugt, so dass keine weiteren Elemente zu deren Befestigung erforderlich sind. Eine so aufgebaute Verbindung zwischen dem Deckenmaterial und der/den Lamelle/n wirkt sich zudem positiv auf das Zusammendruckmaß der Faltenabdeckung aus.

Nach einer bevorzugten Ausführungsform der Erfindung umfasst das Deckenmaterial im Bereich der Faltkanten Knicklinien. Unter einer Knicklinie wird im Rahmen der Erfindung eine solche lokale Veränderung des jeweils verwendeten Materials verstanden, welche dessen Widerstand gegenüber einem Umklappen im Bereich der Faltenkante reduziert. Mit anderen Worten ist die Knicklinie dabei derart ausgestaltet, dass diese einen Bereich vorgibt, um welchen herum Teile des Deckenmaterials zumindest teilweise gegeneinander verschwenkbar sind.

Gemäß einer besonders bevorzugten Weiterbildung des Erfindungsgedankens können die Abstände zwischen den jeweils benachbarten Knicklinien zumindest bereichsweise verschieden sein. Dies meint, dass zwei unmittelbar benachbarte Knicklinien in Bezug auf ihre Erstreckung nicht zwingend parallel zueinander verlaufen müssen, sondern auch beispielsweise eine durchgehende oder bereichsweise Schiefstellung zueinander aufweisen können. Selbstverständlich kann sich der Abstand zwischen zwei Knicklinien auch sprunghaft ändern. Hierdurch sind auf einfache Weise individuelle Ausgestaltungen in Bezug auf den Verlauf der späteren Falten der Faltenabdeckung realisierbar.

Alternativ oder in Ergänzung hierzu können die Abstände zwischen den jeweils benachbarten Knicklinien abwechselnd verschieden sein. Hierdurch kann die Breite der jeweils zwischen zwei unmittelbar benachbarten Knicklinien gelegenen Flanke einer Falte beispielsweise abwechselnd unterschiedlich ausgestaltet sein. Auf diese Weise sind frei wählbare Abstände zwischen den einzelnen Knicklinien generierbar, um beispielsweise voneinander unterschiedliche Faltenhöhen zu erhalten. Durch die abwechselnde Verwendung zweier voneinander unterschiedlicher Breiten der sich jeweils entlang einer Knicklinie unmittelbar gegenüberliegenden Flanken einer späteren Falte ist es möglich, eine überaus kompakte Faltenabdeckung in Bezug auf deren zusammengeschobenen Zustand zu erhalten. Dies liegt daran, dass hierdurch die Faltenkanten auf jeweils einer Seite der zusammengeschobenen Faltenabdeckung nicht aufeinander liegen, sondern abwechselnd versetzt zueinander angeordnet sind. Auf diese Weise liegen die als "Dickstellen" geltenden Faltenkanten nun nicht mehr aufeinander, sondern vielmehr nebeneinander. Im Ergebnis kommt es zu keiner unvorteilhaften Addition aufeinanderliegender Dickstellen mehr, wodurch sich die Höhe der zusammengeschobenen Faltenabdeckung entsprechend reduzieren lässt (minimales Zusammendruckmaß).

Eine Weiterentwicklung der Erfindung sieht vor, dass wenigstens eine der Knicklinien durchgehend oder aber nicht durchgehend und insofern unterbrochen ausgebildet sein kann. In diesem Zusammenhang kann die wenigstens eine Knicklinie eine entsprechend durchgehende oder unterbrochene Rille aufweisen, welche sich dann entlang der zugehörigen Faltenkante und damit in eine senkrecht zur Verschieberichtung verlaufende Querrichtung der Faltenabdeckung erstreckt. Alternativ oder in Ergänzung hierzu kann die Knicklinie auch wenigstens eine Aussparung aufweisen, welche dann entweder nur bereichsweise in das Deckenmaterial hinein oder durch dieses hindurch angeordnet ist. Auf diese Weise kann die Knicklinie auch aus einer Aneinanderreihung feiner Löcher gebildet sein, wodurch sich eine Art Perforation mit entsprechend entlang der Faltenkante herabgesetztem Widerstand des Deckenmaterials gegenüber seinem Knicken ergibt.

Die Erfindung sieht vorteilhafterweise vor, dass das verwendete Deckenmaterial entweder eine einzelne oder aber eine Mehrzahl an Schichten besitzen kann. Dies meint, dass beispielsweise mehrere Lagen eines Materials flächig aufeinander angeordnet sein können, wobei es sich entweder um gleiches oder voneinander unterschiedliches Material handeln kann. Bei einem mehrschichtigen Aufbau wird es als besonders vorteilhaft angesehen, wenn die einzelnen Schichten bzw. Lagen untereinander verbunden sind. In bevorzugter Weise kann die Verbindung zumindest zwischen zwei der Schichten bzw. Lagen beispielsweise stoffschlüssig durch eine geeignete lokale oder vollflächige Verklebung erfolgen. Denkbar ist auch, dass wenigstens zwei Schichten bzw. Lagen aufeinander kaschiert sind. Das Kaschieren kann beispielsweise unter Verwendung eines geeigneten Kaschiermittels wie etwa Leim, Klebstoff oder einem Lack erfolgen. Insgesamt kann das Kaschieren als Nass-, Trocken- oder Thermokaschieren durchgeführt sein, wobei letztere Maßnahme u.U. einen Verzicht auf einen etwaigen Klebstoff ermöglicht.

Je nach Anforderung kann das verwendete Deckenmaterial so aufgebaut sein, dass dieses - zumindest in Bezug auf eine Schicht bzw. Lage bei einem mehrlagigen Aufbau - ein mit einem Kunststoffmaterial beschichtetes Gewebe aufweist. Alternativ oder in Ergänzung hierzu kann das Deckenmaterial wenigstens eine Kunststofffolie aufweisen. Besonders bevorzugt kann es sich bei der Kunststofffolie um eine Polyolefinfolie handeln.

Die für das Deckenmaterial verwendeten Zuschnitte können auf dem Bahnenmaterial, aus dem sie hergestellt werden, frei angeordnet werden. So kann die Knicklinie wenigstens einer der Faltenkanten entweder in Querrichtung und somit senkrecht zur Verschieberichtung verlaufen. Alternativ hierzu kann diese auch in einer abweichenden Richtung verlaufen, so dass deren Verlauf und die Verschieberichtung einen von 90° abweichenden Winkel zwischen sich einschließen.

Die Erfindung berücksichtigt auch solche Ausgestaltungen, welche ein quasi seitliches Anlenken der Faltenabdeckung in Bezug auf deren beispielsweise parallel zur Verschieberichtung verlaufenden seitlichen Kanten wenigstens einer Falte über eine bauliche Führung beinhalten. In diesem Zusammenhang ist eine Ausgestaltung der seitlichen Kanten wenigstens einer Falte in der Form vorgesehen, dass diese mindestens eine Hinterschneidung aufweist, welche mit der Führung korrespondiert. So kann diese Hinterschneidung in vorteilhafter Weise die Führung zumindest teilweise um- oder hintergreifen. Auf diese Weise kann die Faltenabdeckung unmittelbar mit wenigstens einer geeigneten seitlichen Führung kombiniert werden, wodurch sich eine entsprechende Ausrichtung der Faltenabdeckung in Bezug auf deren Längenveränderbarkeit ergibt.

Die Erfindung wird nachfolgend anhand der in den Figuren 1 bis 9 dargestellten Ausführungsbeispiele näher erläutert.

Es zeigen:
- Fig. 1: eine Draufsicht auf einen Zuschnitt eines Deckenmaterials einer erfindungsgemäße Faltenabdeckung in einer ersten Ausführungsform,
- Fig. 2A: eine Draufsicht auf einen Zuschnitt eines Deckenmaterials einer erfindungsgemäße Faltenabdeckung in einer zweiten Ausführungsform,
- Fig. 2B: die erfindungsgemäße Faltenabdeckung aus Fig. 2A in einer Seitenansicht,
- Fig. 3: einen Detailausschnitt eines Endabschnitts der zusammengefalteten Faltenabdeckung mit Blick auf eine ihrer Falten,
- Fig. 4: einen weiteren Detailausschnitt mit einer alternativen Ausgestaltung des Endabschnitts in selber Darstellungsweise wie in Fig. 3,
- Fig. 5: eine Draufsicht auf einen zu Fig. 1 alternativ ausgestalteten Zuschnitt des Deckenmaterials in selber Darstellungsweise,
- Fig. 6: eine Anordnung von Zuschnitten auf einem Bahnenmaterial in einer Draufsicht,
- Fig. 7: eine Draufsicht auf einen zu Fig. 1 und 5 alternativ ausgestalteten Zuschnitt des Deckenmaterials in selber Darstellungsweise,
- Fig. 8: eine perspektivische Darstellung der gemäß Fig. 7 ausgestalteten Faltenabdeckung mit Blick auf einen Bereich einer ihrer seitlichen Kanten sowie
- Fig. 9: die Faltenabdeckung aus Fig. 8 mit einem veränderten perspektivischen Blick auf einen Bereich einer ihrer seitlichen Kanten.

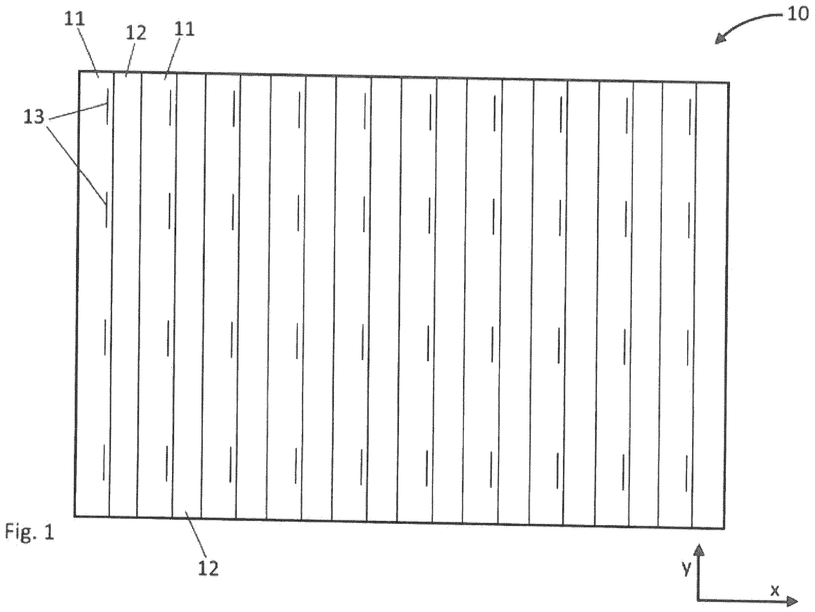

Fig. 1 zeigt eine Aufsicht auf einen rechteckigen Zuschnitt eines Deckenmaterials 10 für eine erfindungsgemäße Faltenabdeckung. Dieses erstreckt sich vorliegend flach liegend in einer Ebene, welche durch eine Verschieberichtung X und eine Querrichtung Y aufgespannt ist. Dabei weist der Zuschnitt des Deckenmaterials 10 eine sich in Verschieberichtung X erstreckende Länge auf, welche dessen sich in Querrichtung Y erstreckende Breite übersteigt. Bei dem Deckenmaterial 10 kann es sich beispielsweise um wenigstens eine Lage eines mit einem Kunststoffmaterial beschichteten Gewebes und/oder einer Kunststofffolie, insbesondere Polyolefinfolie, handeln. Wenigstens eine Lage meint dabei, dass das Deckenmaterial 10 auch eine Mehrzahl miteinander verbundener, insbesondere verklebter oder aufeinander kaschierter, Materialschichten besitzen kann.

Das Deckenmaterial 10 besitzt ersichtlich eine Vielzahl vorliegend parallel zueinander verlaufender Faltenkanten, entlang derer das Deckenmaterial 10 zur Ausbildung von Falten in hier nicht gezeigter Weise abwechseln umgeklappt bzw. gefaltet werden kann. Jede einzelne Falte setzt sich dabei aus einer ersten Flanke 11 und einer zweiten Flanke 12 zusammen, welche hierzu entsprechend abwechseln aufeinanderfolgen.

Die einzelnen Faltenkanten besitzen in nicht näher gezeigter Weise in das Deckenmaterial 10 eingebrachte Knicklinien, entlang derer das Deckenmaterial 10 in geeigneter Weise geschwächt ist. Die Knicklinien der Faltenkanten verlaufen dabei in Querrichtung Y senkrecht zur Verschieberichtung X. Die Schwächung resultiert durch einen bereichsweisen Materialabtrag und/oder entlang der Knicklinie angeordnete Aussparungen, so dass das Deckenmaterial 10 gezielt entlang der jeweiligen Knicklinie faltbar ist. So kann die jeweilige Knicklinie durchgehend oder nicht durchgehend ausgebildet sein. Dabei kann sie wenigstens eine sich in Querrichtung Y erstreckende Rille und/oder wenigstens eine Aussparung besitzen.

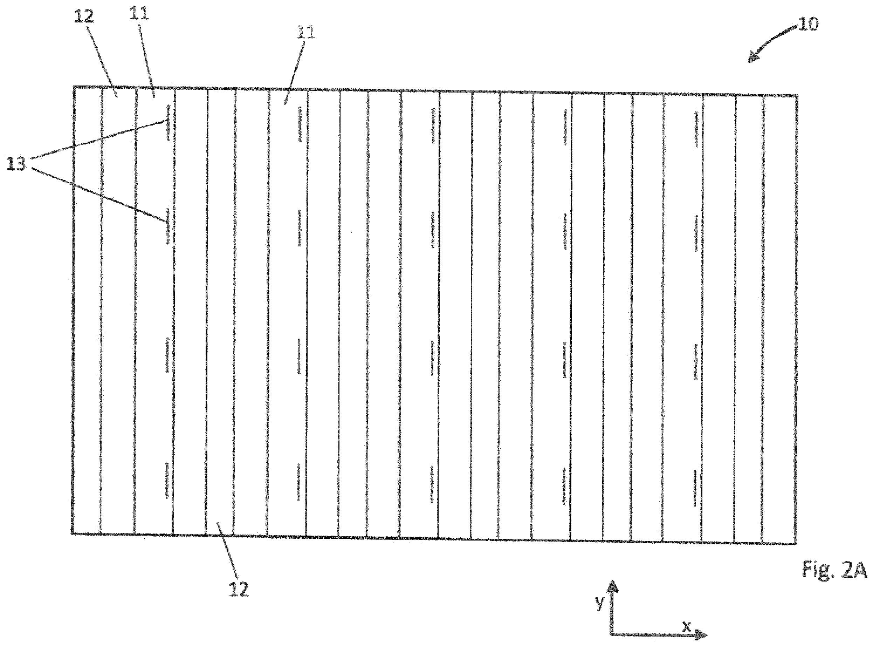

Figur 2A zeigt eine zu Fig. 1 ähnliche Draufsicht auf eine weitere Ausführungsform für ein erfindungsgemäßes Deckenmaterial. Die wesentlichen Eigenschaften sind dieselben wie sie oben im Zusammenhang mit Figur 1 beschrieben wurden.

Bei näherer Betrachtung wird deutlich, dass die Abstände zwischen jeweils unmittelbar benachbarten Faltenkanten bzw. Knicklinien abwechselnd verschieden sind.

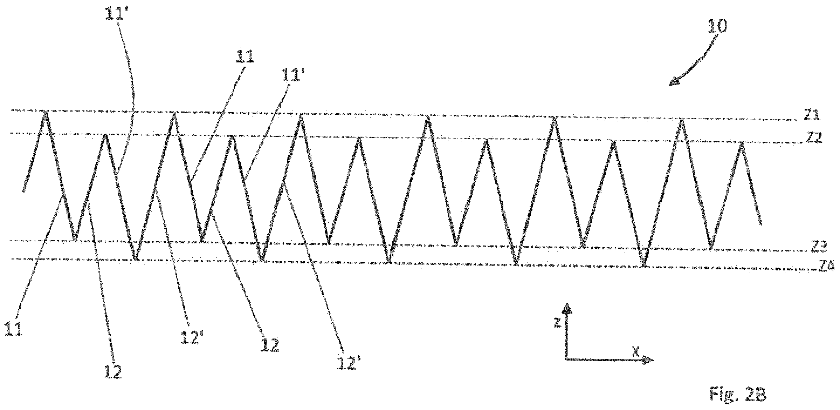

Fig. 2B zeigt eine seitliche Ansicht auf ein bereits in Falten gelegtes Deckenmaterial einer Faltenabdeckung gemäß Fig. 2A. Mit Blick in Querrichtung Y ist zu erkennen, dass die einzelnen aufeinanderfolgenden Falten hinsichtlich ihrer Faltenkanten nicht in einer gemeinsamen, parallel zur Verschieberichtung X verlaufenden Ebene verlaufen, sondern in eine Tiefenrichtung Z der Faltenabdeckung quasi abwechseln vor- und zurückspringen.

Zur näheren Erläuterung werden gedanklich zu jeder Seite der Faltenabdeckung hin je zwei parallel zur Verschieberichtung X verlaufende Tiefenebenen Z1, Z2, Z3, Z4 angenommen, von denen die erste Tiefenebene Z1 auf der einen Seite der Faltenabdeckung und die vierte Tiefenebene Z4 auf der gegenüberliegenden Seite der Faltenabdeckung am weitesten von der Ebene der Verschieberichtung X entfernt sind. Demgegenüber verläuft eine zweite Tiefenebene X2 zwischen der Ebene der Verschieberichtung X und der ersten Tiefenebene X1, während die letzte dritte Tiefenebene X3 auf der gegenüberliegenden Seite zwischen der Ebene der Verschieberichtung X und der vierten Tiefenebene Z4 liegt.

Beginnend bei der mit Bezug auf die Darstellung von Fig. 2 links dargestellten Falte reicht die sich an deren erste Flanke 11 anschließende Faltenkante auf der in Tiefenrichtung Z gelegenen Seite der Faltenabdeckung weit bis zur ersten Tiefenebene Z1. Die dieser Faltenkante entgegen der Tiefenrichtung Z gegenüberliegende Faltenkante der ersten Flanke 11 reicht auf der dann gegenüberliegenden Seite der Faltenabdeckung lediglich bis zur dritten Tiefenebene Z3 und damit nicht ganz so weit nach außen. Dies gilt auch für die an der zweiten Flanke 12 der Falte in Tiefenrichtung Z angrenzende Faltenkante, welche ebenfalls nur bis zur auf der gegenüberliegenden Seite der Faltenabdeckung gelegenen zweiten Tiefenebene Z2 reicht. Die sich daran nach rechts anschließende Faltenkante der ersten Flanke 11' reicht ersichtlich dann wieder weit bis zur vierten Tiefenebene Z4, während die weitere zweite Flanke 12' ebenfalls weit bis zur ersten Tiefenebene Z1 reicht. Dieser abwechselnden Lage der jeweiligen Faltenkanten liegen die unterschiedlichen Breiten der aufeinanderfolgenden Flanken 11, 12; 11', 12' in Verschieberichtung X zugrunde.

Dank dieser alternierenden Lagen der Faltenkanten liegen diese im in Verschieberichtung X zusammengeschobenen Zustand der Faltenabdeckung nicht unmittelbar aufeinander, sondern liegen in Tiefenrichtung Z versetzt zueinander. Da die Faltenkanten in der Regel sogenannte Dickstellen des Deckenmaterials bilden, ermöglicht dieser Versatz kompaktere Abmessungen im hier nicht näher gezeigten vollständig zusammengeschobenen Zustand der Faltenabdeckung.

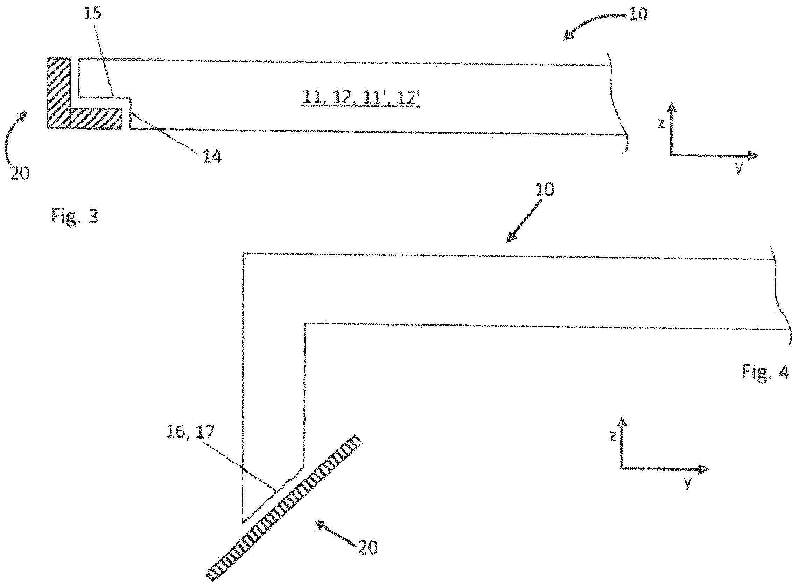

Fig. 3 verdeutlicht eine alternative Ausgestaltung des Deckenmaterials 10 der Faltenabdeckung im Bereich deren seitlichen Kante. Am Beispiel des hier in einer in Verschieberichtung X erfolgenden Draufsicht auf einen Endabschnitt der auf-einanderliegenden Flanken 11, 12; 11', 12' der einzelnen Falten wird deutlich, dass diese rechteckig ausgeklinkt sind. Hierzu weist die Kontur des Deckenabschnitts 10 entlang der seitlichen Kante einen nicht näher dargestellten treppenartigen Verlauf auf. In vorteilhafter Weise kann die Konturierung im Zusammenhang mit der Bearbeitung des Deckenmaterials 10 zur Einbringung der Knicklinien erfolgt sein. Durch die Ausklinkung kann das Deckenmaterial 10 über die so erzeugten seitlichen Kanten 14, 15 an einer entsprechenden Führung 20 geführt sein, welche vorliegend einen L-förmigen Querschnitt besitzt. Durch das Ausklinken wird eine Hinterschneidung bereitgestellt, welche die Führung 20 zumindest bereichsweise hintergreifen kann.

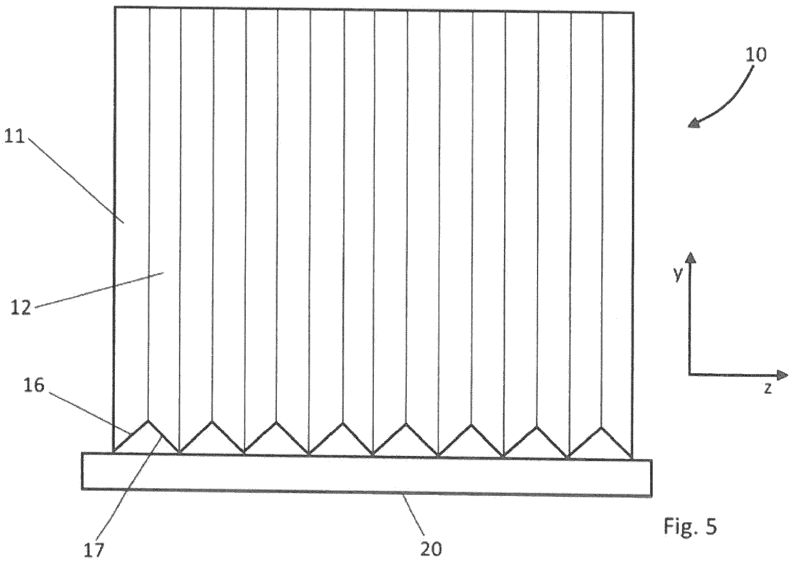

Fig. 4 ist eine alternative Ausgestaltung des Deckenmaterials 10 der Faltenabdeckung in Kombination mit einer Führung 20 zu entnehmen. Ersichtlich ist hierbei die Grundform der Faltenabdeckung nicht auf eine geradlinige Ausgestaltung der Flanken 11, 12; 11', 12' beschränkt, sondern weist vielmehr eine U-Form auf. Da hier lediglich ein Abschnitt der Faltenabdeckung gezeigt ist, ergibt sich die U-Form durch die Kombination der hier gezeigten L-Form. Ersichtlich sind die einzelnen Flanken 11, 12; 11', 12' der Falten hierfür angeschrägt, wodurch sich entsprechend schräg zur Tiefen- bzw. Querrichtung Y, Z verlaufende seitliche Kanten 16, 17 ergeben. Die dieser Form zugrundeliegende Kontur des Deckenmaterials 10 ist in Fig. 5 näher ersichtlich.

Fig. 5 verdeutlicht die Kontur des Deckenmaterials 10, um die in Fig. 4 gezeigte Form der Faltenabdeckung zu erhalten. Hierzu weisen die Flanken 11, 12 jeder Falte endseitig einen schrägen Verlauf auf, wobei sich deren jeweilige Richtung entsprechend abwechselt. So steigt die seitliche Kante 16 der ersten Flanke 11 zur Faltenkante bzw. Knicklinie hin in der Form an, dass sich das Deckenmaterial 10 in diesem Bereich von der Führung 20 entfernt. Anschließend fällt die seitliche Kante 17 der sich anschließenden zweiten Flanke 12 derselben Falte wieder ab, so dass die anschließende Faltenkante bzw. Knicklinie wieder bis zur Führung 20 hin reicht. Im Ergebnis weist das Deckenmaterial 10 ein seitliches Zick-Zack-Muster auf.

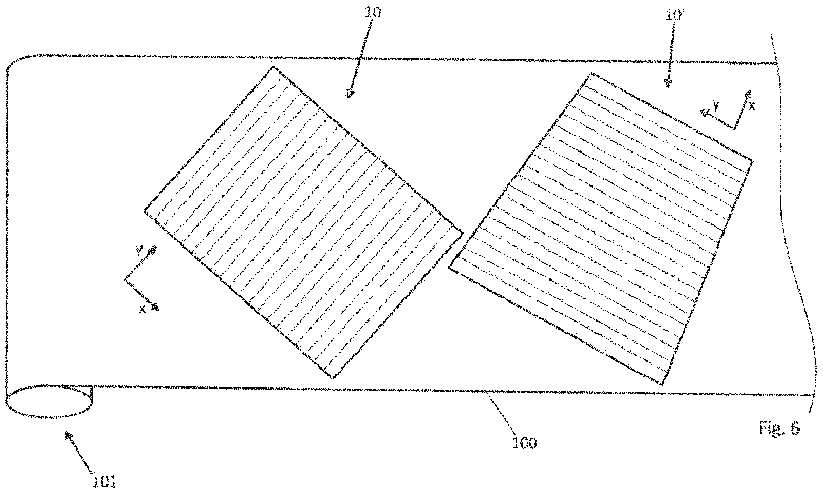

Fig. 6 verdeutlicht die Herstellung der erfindungsgemäßen Faltenabdeckungen mit dem erfindungsgemäßen Verfahren. Hierzu wird ein Bahnenmaterial 100 bereitgestellt, welches beispielsweise als Endlosmaterial über wenigstens einen Rollenkörper 101 geführt wird. Auf dem Bahnenmaterial 100 kann der Zuschnitt für das jeweilige Deckenmaterial 10, 10' beliebig mit an dessen Form gebundener Ausrichtung in Verschiebe- und Querrichtung X, Y positioniert werden, da dessen Außenkontur bei der Bearbeitung aus dem Bahnenmaterial 100 heraus geformt, insbesondere ausgeschnitten wird. Hierdurch kann die Struktur des Bahnenmaterials 100 Berücksichtigung finden, was sich beispielsweise positiv auf die Haltbarkeit der Faltenabdeckung und/oder deren Knickverhalten auswirkt.

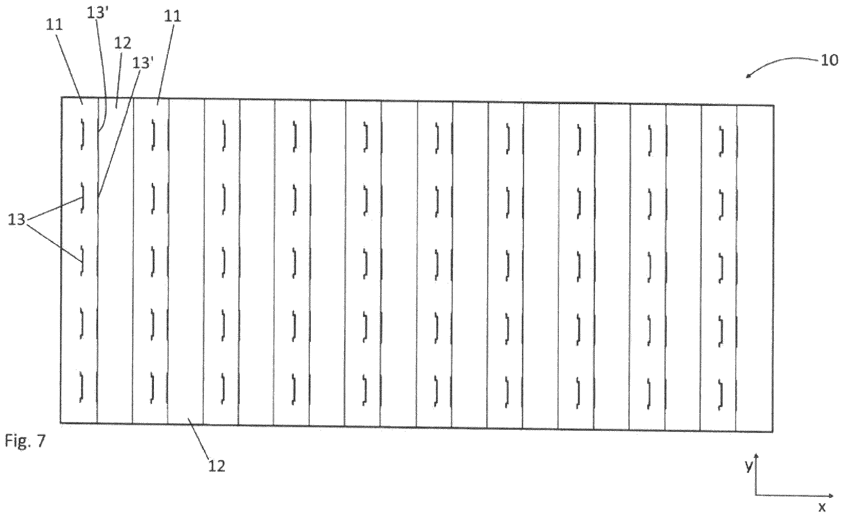

Fig. 7 ist eine Ausgestaltung des Deckenmaterials 10 zu entnehmen, um dieses auf wenigstens einer Außenfläche mit einer hier nicht gezeigten Lamelle 30 zu verbinden. Mit Blick auf Fig. 1 und Fig. 7 kann das Deckenmaterial 10 einzelne erste Befestigungsöffnungen 13 aufweisen, welche jeweils in der ersten Flanke 11 der einzelnen Falten angeordnet sind. Die Befestigungsöffnungen 13 sind dabei jeweils in Form eines in seiner Länge begrenzten Schlitzes durch das Deckenmaterial 10 hindurch ausgebildet, welche sich allesamt parallel zu den Knicklinien erstrecken und durch die Länge des jeweiligen Schlitzes übersteigende Bereiche des Deckenmaterials 10 unterbrochen sind. Wie zu erkennen, sind die einzelnen Befestigungsöffnungen 13 dabei entgegen der Längsrichtung X von der zugehörigen Knicklinie beabstandet.

Fig. 7 weist zusätzlich zu den ersten Befestigungsöffnungen 13 angeordnete zweite Befestigungsöffnungen 13' in dem Deckenmaterial 10 auf. Ersichtlich sind die zweiten Befestigungsöffnungen 13' auf bzw. in der an die erste Flanke 11 angrenzende Faltenkante angeordnet. Mit anderen Worten sind die zweiten Befestigungsöffnungen 13' dabei im Bereich der zwischen den beiden Flanken 11, 12 einer Falte gelegenen Faltenkante bzw. Knicklinie gelegen.

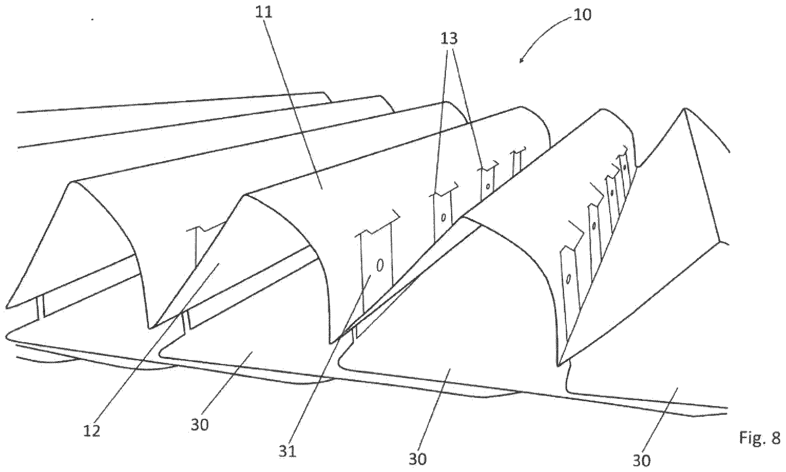

Fig. 8 sind die bereits erwähnten Lamellen 30 in Form von Metalllamellen zu entnehmen, welche eine Außenfläche des Deckenmaterials 10 abdecken. Dabei sind die einzelnen Lamellen 30 zumindest bereichsweise übereinandergelegt, so dass deren Höhe sich im Wesentlichen in Verschieberichtung X der Faltenabdeckung erstrecken. Die Lamellen 30 besitzen etwa senkrecht auf deren Lamellenoberfläche stehende Befestigungsfortsätze 31, die durch die Befestigungsöffnungen 13, 13' durch das Deckenmaterial 10 hindurch geführt sind. Bei den Befestigungsfortsätzen 31 kann es sich beispielsweise um Abbiegungen der Lamellen 30 handeln, welche somit materialeinheitlich einstückig mit diesen ausgebildet sein können.

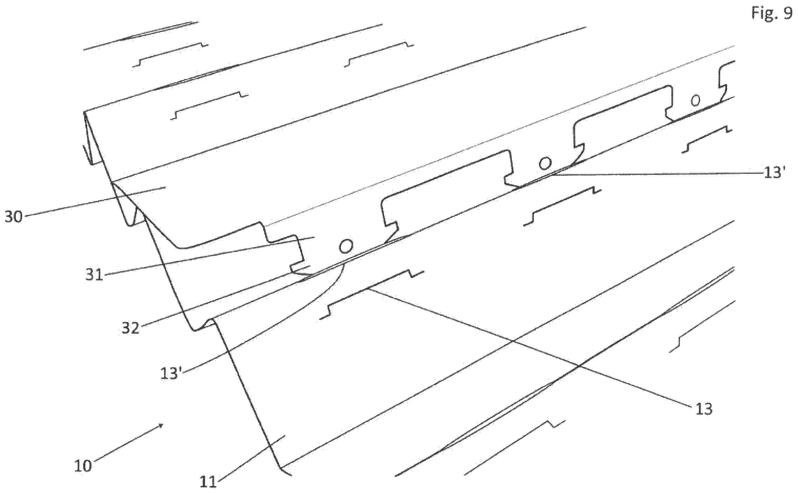

Fig. 9 zeigt insbesondere die Befestigungsfortsätze 31 am Beispiel einer Lamelle 30 mehr im Detail. Wie zu erkennen, sind diese vorliegend als Verlängerung einer im Wesentlichen senkrecht auf der Lamelle 30 endseitig stehenden Kante ausgebildet. Die einzelnen Befestigungsfortsätze 31 weisen dabei eine T-Form auf, wodurch deren freies Ende entsprechend verbreitert ist. Die Verbreiterung ist dabei so ausgebildet, dass diese zu ihren beiden seitlichen Enden hin schräg in Richtung zur Lamelle 30 hin abfällt. Hierdurch sind die Befestigungsfortsätze 31 quasi hakenartig ausgebildet, wobei sie aufgrund der geneigten Ausgestaltung leicht durch die Befestigungsöffnungen 13, 13' hindurch angeordnet werden können. Die sich durch die hakenartige Form ergebenden Hinter-schneidungen bewirken, dass die Befestigungsfortsätze 31 letztlich in den in der ersten Flanke der Falte angeordneten Befestigungsöffnungen 13 gehalten sind. Damit kann auf weitergehende Befestigungsmittel verzichtet werden.

Selbstverständlich können die Lamellen 30 in hier nicht gezeigter Form nicht nur mit Befestigungsfortsätzen 31, sondern stattdessen auch mit einer gleich ausgerichteten Befestigungskante 32 ausgestattet sein, welche dann über geeignete zusätzliche Verbindungsmittel - wie beispielsweise Niete - mit dem Deckenmaterial 10 verbunden ist.

## Patentansprüche

1. Faltenabdeckung, die entlang einer Verschieberichtung (X) längenveränderlich ist und welche ein Deckenmaterial (10) aufweist, welches einen Zuschnitt mit einer Mehrzahl Falten aufweist, die entlang von Faltenkanten gefaltet sind, wobei die Faltenabdeckung auf mindestens einer Außenfläche mit Metalllamellen (30) abgedeckt ist, die an den Falten befestigt sind, **dadurch gekennzeichnet,**
**dass** im Deckenmaterial (10) Befestigungsöffnungen (13, 13') eingebracht sind, und dass die Lamellen (30) eine das Deckenmaterial (10) abdeckende Lamellenoberfläche aufweisen, wobei die Lamellen (30) weiter wenigstens einen, etwa senkrecht auf der Lamellenoberfläche stehenden Befestigungsfortsatz (31), bevorzugt eine Mehrzahl etwa senkrecht auf der Lamellenoberfläche stehende Befestigungsfortsätze (31), aufweisen, der/die durch in das Deckenmaterial (10) eingebrachte Befestigungsöffnungen (13, 13') geführt und so mit dem Deckenmaterial (10) verbunden ist/sind.

2. Faltenabdeckung nach Anspruch 1,
**dadurch gekennzeichnet,**
**dass** das Deckenmaterial erste und zweite Befestigungsöffnungen (13, 13') aufweist, wobei die ersten Befestigungsöffnungen (13) in einer ersten der Flanken (11) einer Falte und die zweiten Befestigungsöffnungen (13') im Wesentlichen auf der den Lamellen (30) zugewandten, an die erste der Flanken (11) angrenzende Faltenkante angeordnet sind.

3. Faltenabdeckung, nach einem der vorigen Ansprüche, **dadurch gekennzeichnet,**
**dass** das Deckenmaterial (10) im Bereich der Faltenkanten Knicklinien umfasst.

4. Faltenabdeckung nach Anspruch 3,
**dadurch gekennzeichnet,**
**dass** die Abstände zwischen jeweils benachbarten Knicklinien bereichsweise oder abwechselnd verschieden sind.

5. Faltenabdeckung nach Anspruch 3 oder 4,
**dadurch gekennzeichnet,**
**dass** die Knicklinien durchgehend oder nicht durchgehend ausgebildet sind und wenigstens eine sich in Querrichtung (Y) erstreckende Rille und/oder wenigstens eine Aussparung aufweisen.

6. Faltenabdeckung nach einem der vorigen Ansprüche,
**dadurch gekennzeichnet,**
**dass** das Deckenmaterial (10) eine Mehrzahl miteinander verbundene, insbesondere verklebte oder aufeinander kaschierte, Schichten aufweist.

7. Faltenabdeckung nach einem der vorigen Ansprüche,
**dadurch gekennzeichnet,**
**dass** das Deckenmaterial (10) ein mit einem Kunststoffmaterial beschichtetes Gewebe und/oder eine Kunststoffolie, insbesondere Polyolefinfolie, aufweist.

8. Faltenabdeckung nach einem der vorigen Ansprüche, **dadurch gekennzeichnet,**
**dass** sie mit mindestens einer der seitlichen Kanten (14, 15; 16, 17) der Falten an einer Führung (20) geführt ist und dazu die seitlichen Kanten (14, 15; 16, 17) der Falten so konturiert sind, dass sie wenigstens eine Hinter-schneidung aufweisen, die die Führung (20) hintergreift.

## Claims

1. Extendable covering which is variable in length along a displacement direction (x) and which comprises covering material (10) which comprises a blank cut with a plurality of folds which are folded along folding edges wherein the extendable covering is covered on at least an outside surface with metal slats (30) which are fastened to the folds,
**characterised in that**
fastening openings (13, 13') are introduced into the covering material (10), and that the slats (30) have a slatted surface covering the covering material (10), wherein the slats (30) further have at least one fastening projection (31) which is virtually at right angles to the slat surface, more particularly a plurality of fastening projections (31) which are virtually perpendicular to the slat surface, wherein the or each projection is/are guided through fastening openings (13, 13') introduced into the covering material (10) and is/are thus connected to the covering material (10) in this way.

2. Extendable covering according to claim 1 **characterised in that**
the covering material has first and second fastening openings (13, 13') wherein the first fastening openings (13) are arranged in a first of the flanks (11) of a fold and the second fastening openings (13') are arranged substantially on the folding edge which adjoins the first of the flanks (11) and faces towards slats (30).

3. Extendable covering according to one of the preceding claims
**characterised in that**
the covering material (10) comprises bending lines in the region of the folding edges.

4. Extendable covering according to claim 3 **characterised in that**
the spacings between each adjoining bending lines are different area by area or in alternation.

5. Extendable covering according to claim 3 or 4 **characterised in that**
the bending lines are designed continuous or noncontinuous and have at least one groove and/or at least one recess extending in the transverse direction (Y).

6. Extendable covering according to one of the preceding claims
**characterised in that**
the covering material (10) comprises a plurality of layers which are connected to one another, more particularly adhesively bonded or laminated on one another.

7. Extendable covering according to one of the preceding claims
**characterised in that**
the covering material (10) comprises a woven fabric coated with a plastics material, and/or a plastics film, more particularly polyolefin film.

8. Extendable covering according to one of the preceding claims
**characterised in that**
it is guided by at least one of the side edges (14, 15; 16, 17) of the folds along a guide (20) and the side edges (14, 15;16, 17) of the folds are for this purpose contoured in such a way that they have at least one rear cut section which engages behind the guide (20).

## Revendications

1. Panneau extensible, lequel peut être modifié en longueur dans une direction de déplacement (X) et lequel présente un matériau de couverture (10), qui présente une découpe dotée d'une pluralité de plis, qui sont pliés le long des bords de pliage, sachant que, sur au moins une face extérieure, la couverture à plis est recouverte de lamelles métalliques (30), qui sont fixées sur les plis,
**caractérisé en ce que**
des ouvertures de fixation (13, 13') sont pratiquées dans le matériau de couverture (10) et que les lamelles (30) présentent une surface lamellaire qui recouvre la matériau de couverture (10), sachant que les lamelles (30) présentent de plus au moins un appendice de fixation (30), placé à peu près verticalement sur la surface lamellaire, lequel/lesquels est/sont conduit/s à travers les ouvertures de fixation (13, 13') pratiquées dans le matériau de couverture (10), et est/ sont ainsi relié/s au matériau de couverture (10).

2. Panneau extensible selon la revendication 1, **caractérisé en ce que**
le matériau de couverture présente des premières et des deuxièmes ouvertures de fixation (13, 13'), sachant que les premières ouvertures de fixation (13) sont disposées dans un premier flanc (11) d'un pli, et que les deuxièmes ouvertures de fixation (13') sont disposées sensiblement sur le bord de pliage adjacent au premier des flancs (11) orienté vers les lamelles (30) .

3. Panneau extensible selon l'une des revendications précédentes,
**caractérisé en ce que**
le matériau de couverture (10) comprend des lignes de pliage dans la zone des bords des plis.

4. Panneau extensible selon la revendication 3, **caractérisé en ce que**
les intervalles entre des lignes de pliage respectivement voisines sont différents selon les sections ou alternativement.

5. Panneau extensible selon revendication 3 ou 4, **caractérisé en ce que**
les lignes de pliage sont formées en continu ou non continu et présentent au moins une rainure s'étendant dans la direction transversale (Y) et / ou au moins un évidement.

6. Panneau extensible selon l'une des revendications précédentes,
**caractérisé en ce que**
le matériau de couverture (10) présente une pluralité de couches reliées les unes aux autres, en particulier collées ensemble ou stratifiées les unes sur les autres.

7. Panneau extensible selon l'une des revendications précédentes,
**caractérisé en ce que**
le matériau de couverture (10) présente un tissu revêtu d'une matière synthétique et/ou une feuille de matière synthétique, en particulier une feuille polyoléphinique.

8. Panneau extensible selon l'une des revendications précédentes,
**caractérisé en ce**
**qu'**il est conduit sur un guidage (20) par au moins l'un des bords latéraux (14, 15 ; 16, 17) des plis et que, de plus, les contours des plis sont tels qu'ils présentent au moins une contre-dépouille, par l'arrière de laquelle s'engage le guidage.
